# EUROPEAN PATENT SPECIFICATION

(11) **EP 4 481 920 B1**
(45) Date of publication and mention of the grant of the patent: **02.12.2026**
(21) Application number: 23877673.6
(22) Date of filing: 11.10.2023
(51) Int. Cl.: H01M 50/24, H01M 50/367, H01M 50/249, H01M 50/211, H01M 50/209

(54) **BATTERY MODULE WITH ENHANCED SAFETY**
BATTERIEMODUL MIT ERHÖHTER SICHERHEIT
MODULE DE BATTERIE À SÉCURITÉ RENFORCÉE

(30) Priority: 12.10.2022 KR 20220130264
(43) Date of publication of application: 25.12.2024
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR)
(74) Representative: Plasseraud IP
(86) International application number: PCT/KR2023/015640
(87) International publication number: WO 2024/080749

(56) References cited:
- EP-B1- 3 125 334
- CN-A- 114 221 086
- JP-A- 2004 158 393
- JP-A- H0 676 852
- KR-A- 20220 108 569
- KR-B1- 101 574 081
- US-A1- 2014 322 566

## Description

### TECHNICAL FIELD

The present disclosure relates to a battery module and, more specifically, a battery module with enhanced safety using an improved structure for discharging venting gas or the like.

The present application claims priority to Korean Patent Application No. 10-2022-0130264 filed on October 12, 2022 in the Republic of Korea.

### BACKGROUND ART

As the demand for portable electronic products, such as laptops, video cameras, mobile phones, and the like, that use electricity as a driving source is rapidly increasing and as mobile robots, electric bicycles, electric carts, electric vehicles, and the like are widely commercialized, active research on high-performance secondary batteries capable of being repeatedly charged and discharged is underway.

Commercialized secondary batteries include nickel-cadmium batteries, nickel-hydrogen batteries, nickel-zinc batteries, lithium secondary batteries, and the like, and among them, lithium secondary batteries are being studied more intensively than other types of secondary batteries and applied more extensively to actual products due to their features of high energy density and high operating voltage, as well as their advantages of free charging and discharging according to the rare memory effect and a very low self-discharge rate, compared to nickel-based secondary batteries.

Recently, secondary batteries have been widely used in medium and large devices such as electric vehicles and energy storage systems (ESSs), as well as in small devices such as portable electronic devices.

In this case, a battery module in which multiple secondary batteries electrically connected to each other are stored inside a module case is generally applied thereto, and furthermore, a battery pack in which multiple battery modules are electrically connected to each other is also applied to the case where high power or large capacity is required.

Although secondary batteries having the above-described advantages are increasingly used in various forms, the behavior of secondary batteries may cause swelling, application of rush current, overheating due to Joule heating, thermal runaway due to decomposition reaction of the electrolyte.

In addition, if an event such as a short circuit between secondary batteries, excessive temperature rise, or the like occurs, a large amount of venting gas may be generated, and if it worsens, high-temperature particles including electrode active materials and aluminum particles may be emitted, in addition to flames, so it may be more important to secure the safety of the battery module.

Battery modules or battery packs may be more vulnerable to thermal events because they contain multiple secondary batteries (battery cells) or multiple cell assemblies that are space-intensively stored therein. In particular, if thermal runaway occurs inside the battery module, high-temperature gas, flame, heat, etc. are generated, and if these fail to be quickly controlled, a chain fire or explosion due to thermal propagation may occur in adjacent battery modules, as well as in the relevant battery module.

Medium and large battery packs applied to vehicles such as electric vehicles that users ride have a large number of battery cells and battery modules mounted more intensively to increase output and capacity, which may lead to large-scale fires and human damage according thereto, so there is a great need to more thoroughly suppress and control thermal events that may occur in the battery modules and the like from the initial stage.

Although existing battery modules include structures such as outflow holes, when a thermal event such as venting gas or flame occurs, that discharge the same to the outside, since they are configured in an entirely sealed or closed structure, if a thermal event beyond the discharge capacity of the outflow hole occurs in a short period of time, a fatal safety problem such as collapse of the structure of the battery module or explosion of the battery module may be brought.

EP3125334B1 discloses an energy storage apparatus. US2014322566A1 discloses a rechargeable battery pack including pack cover.

### DISCLOSURE

### Technical Problem

The present disclosure has been designed to solve the problems of the related art, and therefore the present disclosure is directed to providing a battery module with enhanced safety capable of adaptively dealing with a large amount of venting gas by employing an improved structure that effectively secures a sufficient discharge space or area.

The technical problems that the present disclosure seeks to solve are not limited to the above-mentioned problems, and other problems not mentioned will be clearly understood by those skilled in the art from the description of the invention described below.

### Technical Solution

According to one aspect of the present disclosure, there is provided a battery module including: a module case configured to form an inner space; a plurality of battery cells accommodated in the inner space of the module case and arranged in at least one direction; and a guiding plate connected to at least one side surface of the module case and configured to extend in a diagonal direction.

The module case includes side plates configured to cover both sides of the plurality of battery cells, and the guiding plate is connected to the side plate and extends in the diagonal direction.

In addition, the guiding plate of the present disclosure includes one or more through-holes through which venting gas is discharged, and in this case, the through-holes of the present disclosure may be preferably formed at an upper end of the guiding plate.

Specifically, the guiding plate includes: a first plate extending in a diagonal direction; and a second plate disposed in the horizontal direction so as to be connected to the top of the first plate and configured to face and contact with an upper frame of a pack housing.

Preferably, the second plate of the present disclosure may include one or more through-holes formed inward from the first plate.

Here, the through-hole of the present disclosure is preferably formed to communicate with a venting channel formed inside the upper frame and to correspond to an inlet formed on the lower surface of the upper frame.

In addition, the guiding plate of the present disclosure may have one or more groove lines formed on the inner surface thereof to extend in a horizontal direction, or one or more protrusions protruding outwards from the inner surface.

According to another aspect of the present disclosure, there is provided a battery pack including the battery module according to the present disclosure.

According to another aspect of the present disclosure, there is provided a vehicle including the battery module according to the present disclosure.

### Advantageous Effects

According to the present disclosure, it is possible to provide a battery module with enhanced safety, which has a sufficient space secured for venting gas and flame generated from the battery cell or cell assembly to be discharged, thereby adaptively dealing with a significant thermal event occurring in a short period of time and preventing structural collapse or disintegration of the battery module itself.

In addition, according to the present disclosure, the temperature of venting gas can be naturally lowered and its physical force can weaken in the process in which the venting gas is discharged along the guiding plate by employing a mechanical structure that generates reverse flow and expands the contact area, thereby further increasing the safety of the battery module.

According to an embodiment of the present disclosure, a structure that is organically combined with the upper frame of the pack housing may be applied to the battery module, thereby increasing the efficiency of a process of packaging the battery module into the pack housing and improving the physical rigidity of the battery pack itself, as well as the structural engineering rigidity of the battery module itself.

In particular, since the guiding plate is configured to be organically connected to the venting channel of the pack housing, it is possible to more simply integrate the passages of the battery pack through which venting gas or the like is discharged without adding other structures.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view illustrating the overall appearance of a battery module according to an embodiment of the present disclosure.
FIG. 2 is an exploded perspective view illustrating the internal structure of the battery module shown in FIG. 1.
FIG. 3 is a diagram schematically illustrating the state in which venting gas or the like is discharged from a battery module according to an embodiment of the present disclosure.
FIG. 4 is a diagram illustrating the overall structure of a guiding plate according to an embodiment of the present disclosure.
FIG. 5 is a diagram illustrating the overall structure of a guiding plate according to another embodiment of the present disclosure.
FIG. 6 is a diagram illustrating a guiding plate of the present disclosure coupled to an upper frame of a pack housing.
FIGS. 7 and 8 are diagrams illustrating the structure of an upper frame of a pack housing physically coupled to a guiding plate of the present disclosure.
FIG. 9 is a diagram illustrating a guiding plate coupled to an upper frame of a pack housing according to an embodiment of the present.
FIGS. 10 and 11 are diagrams illustrating the structures of guiding plates according to other embodiments of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configuration proposed in the embodiments and drawings of this specification indicates only the most preferable embodiment of the present disclosure and does not represent all technical ideas of the present disclosure, so it should be understood that various equivalents and modifications could be made thereto at the time of filing the application.

It is obvious that the axis shown in the drawing, terms referring to the axis, and terms referring to directions such as up, down, front, back, vertical, and the like described with respect to the axis are intended to provide relative criteria to describe embodiments of the present disclosure, instead of specifying any direction or location on an absolute basis, so they may also vary relatively depending on the location of a target object, the location of the an observer, viewing directions, or the like.

Hereinafter, an embodiment of the present disclosure will be described by defining the Z-axis as a criterion for the up/down or vertical direction as described above, and from the perspective corresponding thereto, embodiments of the present disclosure will be described by defining the Y-axis as a criterion for the front or back direction and the X-axis as a criterion for the left or right direction. According to the criteria defined above, the XY plane corresponds to a horizontal plane, and the Y-axis direction corresponds to the longitudinal direction (corresponding to the major axis) of the battery cell 110 or cell assembly 100 in the embodiments of the present disclosure.

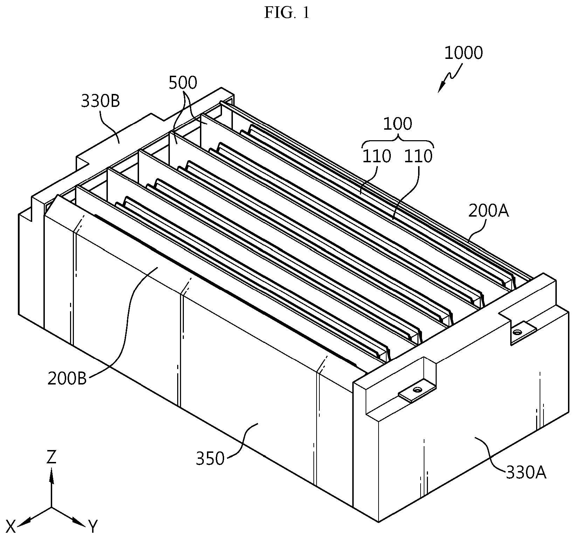

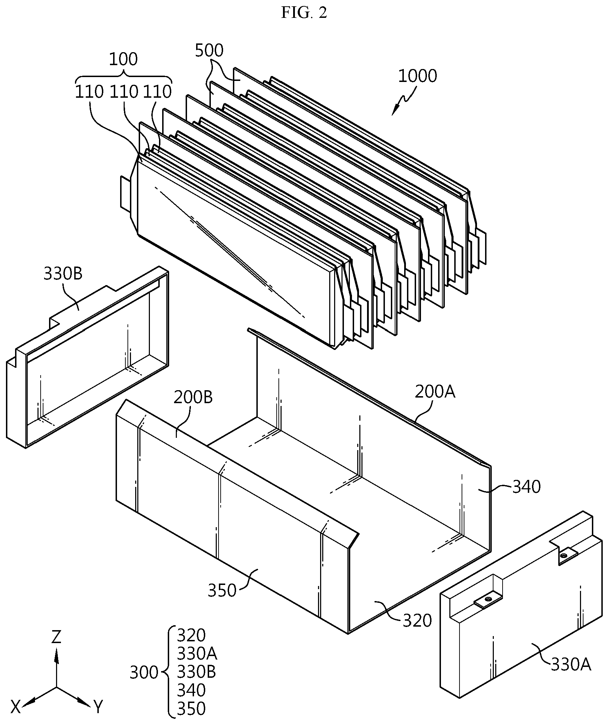

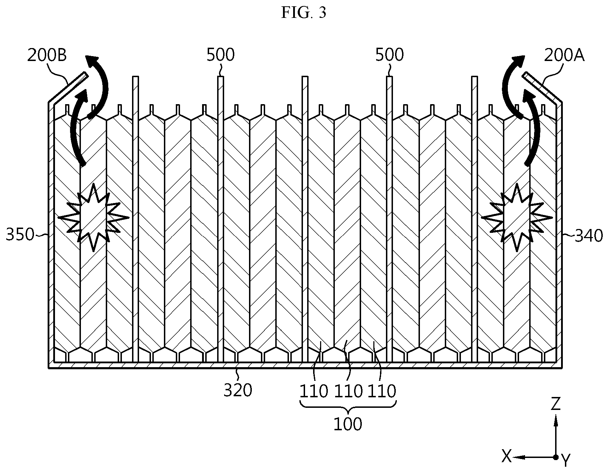

FIG. 1 is a perspective view illustrating the overall appearance of a battery module 1000 according to an embodiment of the present disclosure, FIG. 2 is an exploded perspective view illustrating the internal structure of the battery module 1000 shown in FIG. 1, and FIG. 3 is a diagram schematically illustrating the state in which venting gas or the like is discharged from a battery module 1000 according to an embodiment of the present disclosure.

As shown in the drawing, the battery module 1000 includes a module case 300 that functions as a case, a cell assembly 100 that is stored in an inner space provided by the module case 300 and includes one or more battery cells 110, and a guiding plate 200 (200A or 200B).

The battery cell 110 indicates a secondary battery including an electrode assembly, an electrolyte, and a battery case, and although a pouch-type secondary battery with high energy density and capable of being easily stacked is shown by way of example in the drawing, a cylindrical or prismatic secondary battery may also be applied to the battery cell 110.

As shown in FIG. 2 or the like, the cell assembly 100 may be configured such that battery cells 110 having minor axes erected in the vertical direction (the Z-axis in the drawing) are arranged (stacked) side by side in the left and right directions (the X-axis in the drawing).

Although the drawing shows an example in which the cell assembly 100 configured in a 1x1 matrix is accommodated in the module case 300, based on the longitudinal (X-axis) and traverse (Y-axis) directions, a cell assembly 100 having various combinations of arrangement such as a 1x2 or 2x3 matrix may be provided in the module case 300 depending on the spatial characteristics, electrical capacity, and power of the applied device.

In addition, in the case where a plurality of battery cells 110 is grouped, leads corresponding to the same polarity of the respective battery cells 110 may be interconnected by well-known methods and means to form a common electrode of the cell assembly 100.

Depending on the embodiment, a heat shield plate 500 in an upright state along the vertical direction (corresponding to the Z-axis) may be interposed between the battery cells 110 or the cell assemblies 100. This heat shield plate 500 serves to block or reduce the propagation of heat, gas, flame, or the like that may occur between the battery cells 110 or the cell assemblies 100 or to delay the propagation time thereof.

The heat shield plate 500 may be made of a ceramic material such as mica or a material such as silicon, and may include a core plate made of a metal material to increase rigidity and durability, and a flame-retardant portion provided on the outer sides of the core plate.

It is preferable that the height (Z-axis direction) of the heat shield plate 500 is configured to be greater than the heights of the respective battery cells 110 in order to effectively suppress thermal events transferring to adjacent battery cells 110.

In addition, the heat shield plate 500 is preferably configured to be longer than the major-axial length (Y-axis direction) of the battery cell 110 or cell assembly 100 in order to suppress the propagation of venting gas or the like generated from the battery cell 110 or cell assembly 100 to the adjacent battery cells 110 or cell assemblies 100 and induce the generated venting gas to move upwards.

The module case 300 is a configuration for accommodating one or more cell assemblies 100 and, as shown in the drawing, may be configured to include a lower plate 320, an end plate 330, and side plates 340 and 350. The end plate 330 and the side plates 340 and 350 may constitute the side surfaces of the module case 300, and the lower plate 320 may be configured to constitute the lower surface of the module case 300. The module case 300 of the present disclosure may have a structure in which an upper plate is excluded in order to secure sufficient space for discharge of venting gas or the like and to induce the venting gas or the like to be discharged upwards.

One or more of the end plate 330, the lower plate 320, and the side plates 340 and 350 may be configured in a plate shape or in the form of a polyhedron (for example, a rectangular parallelepiped) having a predetermined thickness or more, and the side plates 340 and 350 may be disposed such that the respective lower ends thereof are connected to the lower plate 320.

At least some of the lower plate 320 and the side plates 340 and 350 may be configured to be integral with each other. For example, one or more of the left plate 340 and the right plate 350 may be configured to be integral with the lower plate 320. In this case, the left plate 340, the right plate 350, and the lower plate 320, which are integrated with each other, may be referred to as a U-plate (frame) or the like depending on their shape characteristics.

The front plate 330A and the rear plate 330B, as the end plates 330, may be connected to the openings of the front and rear ends of the U-plate, respectively. The adjacent plates may be coupled by laser welding or ultrasonic welding as well as bolting using flanges.

One or more of the lower plate 320 and the side plates 340 and 350 may have an inner surface that is made of clad metal or has a flame-retardant material, such as GFRP or the like, attached thereto.

One or more of the plates 320 to 350 constituting the module case 300 may be made of a metal material such as high-strength SUS (stainless steel), a plastic material such as ABS (acrylonitrile-butadiene-styrene copolymer) resin having high heat resistance, high temperature resistance, and high impact resistance, or another type of plastic material in order to effectively protect the internal components thereof, and may also be made of different materials between parts thereof depending on the embodiment.

The module case 300 of the present disclosure may also be implemented in various structures and forms, including the embodiments illustrated in the drawings, depending on the shape, structure, size, number of members to be combined, and the like.

In order to implement the primary technical idea of the present disclosure, a guiding plate 200 is provided on at least one side surface of the module case 300. In particular, the guiding plate 200 may be provided on one or more of the side plates 340 and 350 so as to extend in a diagonal direction while blocking a portion of the left or right side of the module case 300.

As shown in FIG. 3, the guiding plate 200 of the present disclosure induces venting gas generated from the battery cell 110 or the cell assembly 100 to be quickly discharged upwards, thereby suppressing spread of the generated venting gas to adjacent battery cells 110 or cell assemblies 100.

In particular, in the case where a plurality of battery modules 1000 is included in a battery pack, the battery modules 1000 may be disposed along the left and right directions in which the side plates 340 and 350 are provided rather than the front and back directions in which the end plates 330 are provided. Therefore, according to the above implemented configuration of the present disclosure, since the guiding plate 200 is provided on the side plates 340 and 350 so as to extend therefrom, it is possible to suppress the spread of venting gas or the like to adjacent battery modules 1000.

The guiding plate 200 may be provided by bending the side plates 340 and 350. In this case, the guiding plate 200 may be easily provided by processing the module case 300.

As shown in FIG. 3, since the guiding plate 200 of the present disclosure is configured to be connected to the left plate 340 or the right plate 350 and extend in a diagonal direction therefrom, sufficient space may be formed in the left or right upper direction as shown in FIG. 3.

Since the guiding plate 200 of the present disclosure is configured in the shape of a plate, the space provided by the guiding plate 200, based on the cell assembly 100, may expand in the longitudinal direction (Y-axis direction), so even if a large amount of venting gas or the like is generated in a short period of time, the venting gas or the like may be effectively discharged to the outside through the sufficiently secured space.

According to the present disclosure, a plurality of guiding plates 200 may be provided. For example, as shown in FIG. 2 or the like, a plurality of guiding plates 200 may be provided to extend from the left plate 340 and the right plate 350, respectively. For efficiency of understanding and explanation, as shown in FIG. 2 or the like, the guiding plates 200 are denoted by reference numerals 200A and 200B, respectively, depending on the positions thereof (left and right sides) (based on the X-axis). Details of the guiding plate 200 of the present disclosure and the configuration of the present disclosure related thereto will be described later. As shown in the drawing, the guiding plates 200A and 200B of the present disclosure have inclined surfaces extending inward, thereby producing a narrower separation gap than the internal width (X-axis direction) of the module case 300. Therefore, when mounting the battery cell 110 or cell assembly 100 into the module case 300, it is better to widen the space between them using a jig device or the like and then mount the battery cell 110 or the like into the module case 300 therethrough.

When the jig device is removed after the mounting of the battery cell 110 or the like is completed, the guiding plate 200 may be restored to the shape or posture shown in the drawing by the elastic force of the guiding plate 200 made of metal or the like.

Depending on the embodiment, the left guiding plate 200A and the right guiding plate 200B may be configured to be connected to each other by one or more wires (not shown) extending in the longitudinal direction (X-axis direction).

According to this implemented configuration of the present disclosure, it is possible to improve the positional fixing force of the left guiding plate 200A and the right guiding plate 200B and, even if venting gas is applied at high pressure to one or both sides, firmly maintain the durability of the module case 300.

Additionally, in order to increase the efficiency in the process of mounting the cell assembly 100 or battery cell 110 into the module case 300, the wire is preferably configured to be detachably connected to at least one of the left guiding plate 200A or the right guiding plate 200B.

Depending on the embodiment, the wire is preferably implemented using a shape memory alloy (SMA) that deforms in a shrinking direction when the surrounding temperature increases.

According to this implemented configuration, even if the temperature and pressure of the battery module 1000 increase due to the discharge of venting gas or the like, the module case 100 may be physically supported more firmly, thereby suppressing or delaying damage to the module case 100 or collapse thereof.

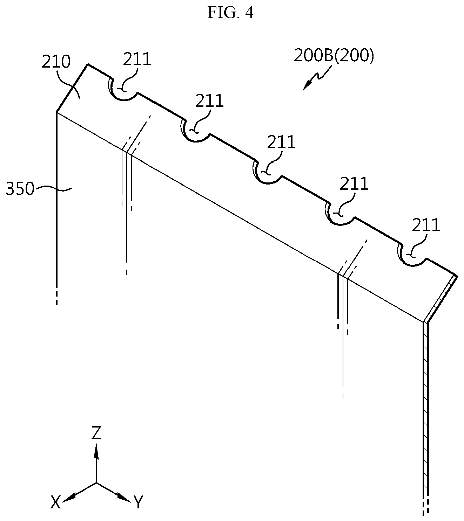

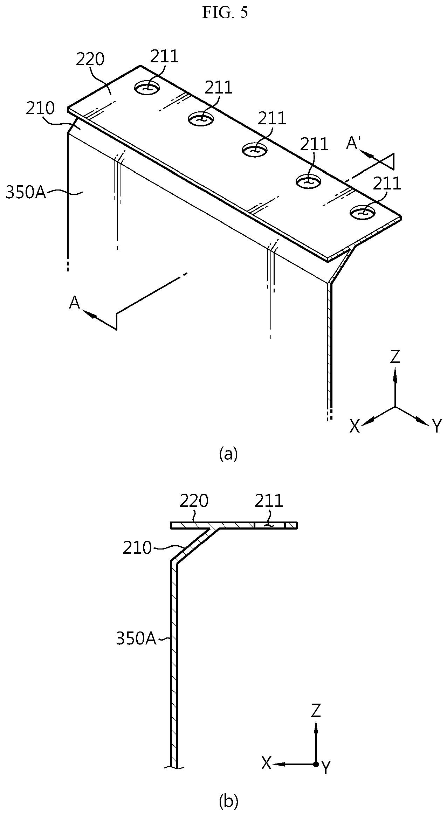

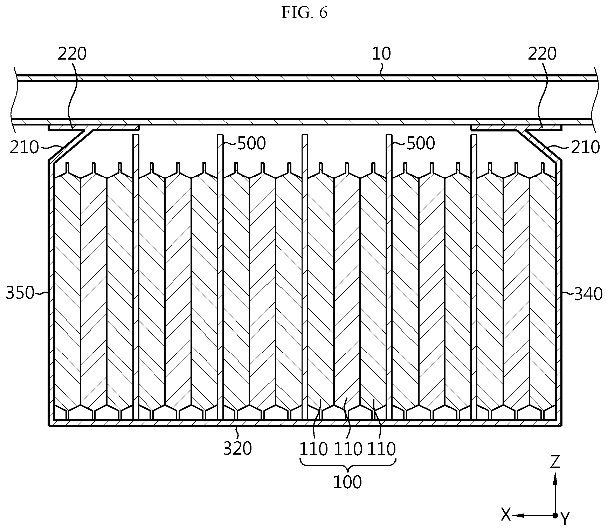

FIGS. 4 and 5 are diagrams illustrating the overall structure of the guiding plate 200 according to embodiments of the present disclosure, and FIG. 6 is a diagram illustrating the guiding plate 200 of the present disclosure coupled to an upper frame 10 of a pack housing (not shown).

In the following description, the detailed structure and operation of the guiding plate 200 of the present disclosure will be described based on the right guiding plate 200B. Since the left guiding plate 200A has a structure corresponding to the right guiding plate 200B, the following description of the right guiding plate 200B may also be applied to the left guiding plate 200A.

As shown in FIG. 4, the guiding plate 200 of the present disclosure has one or more through-holes 211 formed thereon to allow venting gas or the like to be discharged therethrough, and the through-holes 211 are preferable formed at the upper end of the guiding plate 200.

If the through-holes 211 are formed on the guiding plate 200 as described above, venting gas or the like generated from the battery module 1000 may flow through the through-holes 211, thereby guiding the movement of the venting gas or the like in a specific direction.

In addition, if the through-holes 211 are formed at the upper end of the guiding plate 200, it is possible to more effectively implement organic linkage with a venting channel VC provide in an upper frame 10 of a pack housing (not shown) without addition of other complicated configurations or structures. This will be explained later.

The guiding plate 200 of the present disclosure includes a first plate 210 extending in a diagonal direction and a second plate 220 that is disposed in the horizontal direction so as to be connected to the top of the first plate 210 and faces and contacts with the upper frame 10 of the pack housing (not shown). Here, "face and contact with the upper frame" may indicate to come into contact with the upper frame while facing the same, to come into contact with the upper frame while corresponding thereto, to face and come into contact with the upper frame, or the like.

In the case where the second plate 220 is included in the guiding plate 200 as described above, the contact area with the upper frame 10 of the pack housing may be expanded, so it is possible to improve physical support force of the battery module 1000 and positional fixing force when packaged as a battery pack.

In addition, since the guiding plate 200, which is overall structured in a complex manner in the horizontal direction and an oblique vertical direction, physically faces and contacts with or is coupled to the upper frame 10 of the pack housing, it is possible to effectively increase the structural engineering rigidity of the battery pack.

The second plate 220 may be connected to the first plate 210 so as to extend in both the front direction and the back direction (based on the Y-axis), or may extend in one of the front direction and the back direction depending on the embodiment.

Even if the second plate 220 extends in one direction or bends in one direction with respect to the first plate 210, in order to enhance structural engineering rigidity or the like, as shown in FIG. 5 or the like, the second plate 220 is preferably configured to extend or bend in a direction opposite the diagonal direction of the first plate 210, that is, such that the first plate 210 and the second plate 220 form an acute angle therebetween.

As described above, in the case where the guiding plate 200 is configured as the first plate 210 and the second plate 220, the through-hole 211, which functions as an outlet through which venting gas or the like is discharged, may be formed on the second plate 220 as shown in FIG. 5.

In this case, the through-hole 211 is preferably formed on the surface of the second plate 220 inward from the first plate 210. If the through-hole 211 is provided inward from the first plate 210 as described above, it is possible to more organically implement the structural connection relationship with the upper frame 10 of the pack housing, as will be described later, and to more effectively guide venting gas or the like to the venting channel VC through the same.

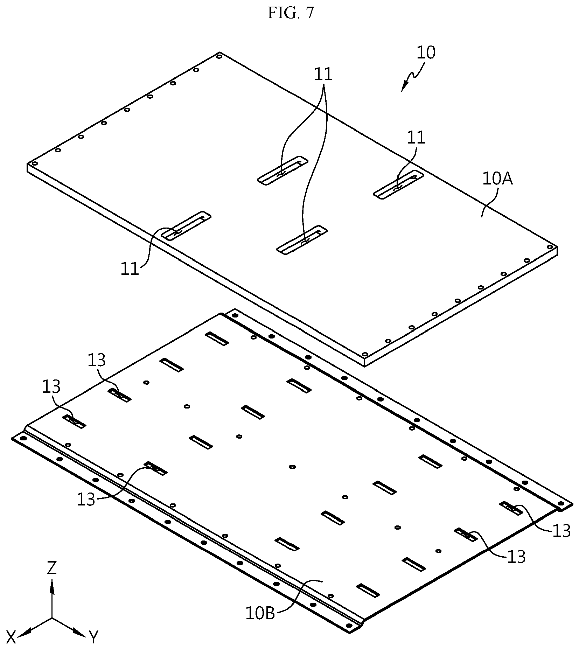

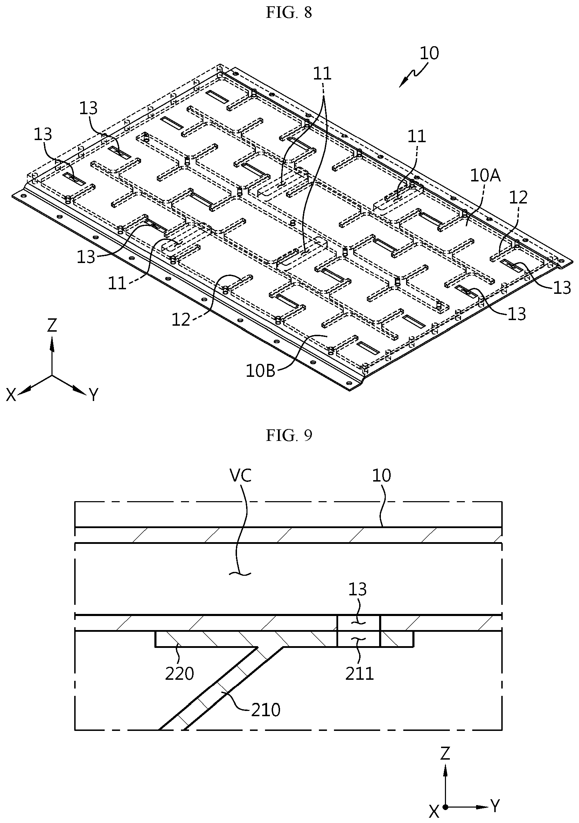

FIGS. 7 and 8 are diagrams illustrating the structure of an upper frame 10 of a pack housing physically coupled to a guiding plate 200 of the present disclosure, and FIG. 9 is a diagram illustrating a guiding plate coupled to an upper frame 10 of a pack housing according to an embodiment of the present.

As shown in FIGS. 7 and 8, the upper frame 10 of the pack housing (not shown) includes an outlet 11 through which venting gas is discharged and an inlet 13 through which venting gas flows in, and has a venting channel VC, including at least one rib 12 that is a structure installed in a perpendicular direction or the like, formed therein. For reference, the pack housing indicates a case or housing of a battery pack in which one or more battery modules 1000 are accommodated.

According to the embodiment, as illustrated in FIGS. 7 and 8, the upper frame 10 of the pack housing may include a first frame 10A provided in the upper portion and a second frame 10B coupled to the bottom of the first frame 10A in the lower portion.

In this case, the outlet 11 may be formed in the first frame 10A, and the inlet 13 may be formed in the second frame 10B, and the structure forming venting paths including the ribs 12 may be formed below the first frame 10A. In this state, when the first frame 10A and the second frame 10B are physically coupled to each other in the vertical direction, the upper frame 10 forms a closed space inside, and the space functions as a venting channel VC.

In the case where the venting channel VC is formed in the upper frame 10 as described above, the movement path of venting gas expands or extends, so the physical features such as temperature or pressure of venting gas may be lowered during the process of discharging the venting gas, and if flame is emitted along with the venting gas, the flame itself may be weakened by breaking down the flame's behavior, i.e., the strong feature of straight.

In addition, in the case where flame factors (sparks, particles, or the like) are accompanied by the venting gas, their movement may be inhibited by the physical structure forming the venting channel VC so that the flame factors may adhere or may be captured, thereby effectively suppressing diffusion of the factors or elements, which may function as ignition sources, according to flying and scattering thereof and more effectively preventing a chain reaction of thermal events.

When the battery module 1000 is stored in a pack housing (not shown) of a battery pack, the top opening of the battery module 1000 may be covered by the upper frame 10 of the pack housing.

In this case, as shown in FIG. 9, one or more through-holes 211 formed on the guiding plate 200, specifically, on the second plate 220, are configured to face and contact with the upper frame 10 so as to physically communicate with the inlet 13 formed on the lower surface or the like of the upper frame 10.

According to the above configuration, the discharge structure of the respective battery modules 1000 at the sub-level may be integrated into the overall discharge structure of the battery pack only by a simple process of causing the upper frame 10 of the pack housing to face and contact with the guiding plate 200 of the present disclosure.

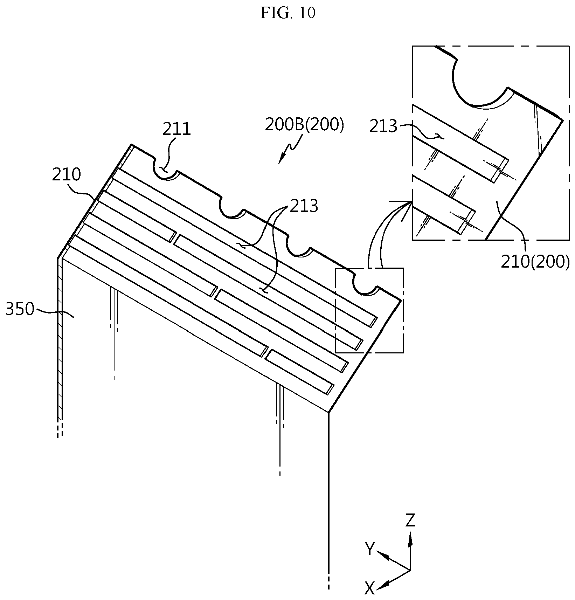

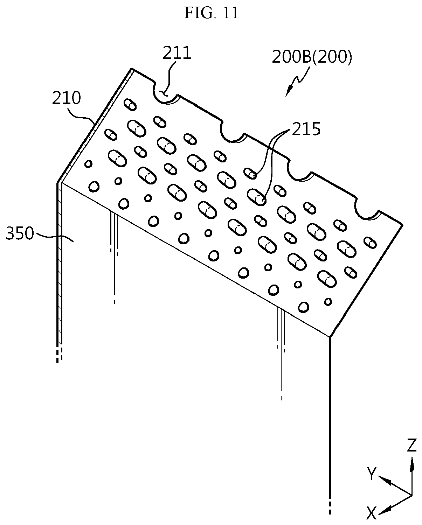

FIGS. 10 and 11 are diagrams illustrating the structures of guiding plates 200 according to other embodiments of the present disclosure.

As shown in FIG. 10, the guiding plate 200 of the present disclosure, specifically, may have one or more groove lines 213 formed on the inner surface of the first plate 210 so as to extend in the horizontal and longitudinal direction (Y-axis direction) of the inner surface.

This groove line 213 may have a shape in which a groove, concavely formed inward from the outer surface, extends in the longitudinal direction, and as shown in the drawing, a plurality of groove lines 213 may be provided at appropriate intervals in the vertical direction (Z-axis direction).

As illustrated in the drawing, the groove line 213 may be configured as a single unit continuously extending in the horizontal and longitudinal direction or may be configured as two or more part units. In addition, although the groove lines 213 having a constant arrangement interval and a line (lane) width are shown in the drawing, they may be configured in various other forms as long as eddy and vortex phenomena are induced, as will be described later.

Since venting gas or the like has a behavior feature of moving upwards due to its high temperature, and since the guiding plate 200 of the present disclosure is inclined in the diagonal direction, the venting gas or the like generated from the battery cell 110 may more effectively move upwards through the guiding plate 200 of the present disclosure.

In addition, the venting gas or the like moves upwards along the surface of the guiding plate 200 of the present disclosure and comes into hydrodynamical contact with the groove of the groove line 213 during the upward movement.

This produces a reverse component due to resistance and physical collision with respect to the groove line 213, so that a relatively small eddy or vortex is induced around the groove line 213. This eddy or the like is continuously generated all the time during which heat or the like flows in, and the higher or faster the thermal flow, the more the generation of vortices is promoted.

Therefore, while passing through the guiding plate 200, the venting gas or the like is weakened to a large extent by the eddy or the like formed by the groove line 213, and furthermore, the movement path is expanded by the groove line 213, thereby lowering the temperature due to heat loss according to an increase in the contact area.

It is preferable that the number, shapes, depths, widths, lengths, and the like of the groove lines 213 are variably designed depending on the specifications of the battery cell 110 or the like, the characteristics of heat to be generated, and attribute information of the guiding plate 200 such as size, material, and thickness thereof.

As shown in FIG. 11, the guiding plate 200 of the present disclosure may have one or more protrusions 215 formed to protrude outwards from the inner surface thereof. In the case where the protrusion 215 is formed on the guiding plate 200, specifically, on the first plate 210 as described above, physical obstruction or blocking of thermal flow may occur complexly, thereby obtaining an effect corresponding to the effect of the above-described groove line 213 of the present disclosure.

A battery pack according to the present disclosure may include one or more battery modules according to the present disclosure described above. In addition, the battery pack according to the present disclosure may further include, in addition to the battery module, various other elements such as a BMS, a busbar, a pack case, a relay, a current sensor, or the like, which are known at the time of filing the present disclosure.

A battery module according to the present disclosure may be applied to vehicles such as electric vehicles or hybrid vehicles. That is, a vehicle according to the present disclosure may include the battery module according to the present disclosure or the battery pack according to the present disclosure. In addition, the vehicle according to the present disclosure may further include various other elements included in the vehicle in addition to the battery module or battery pack. For example, the vehicle according to the present disclosure may further include a vehicle body, a motor, or a control device such as an ECU (electronic control unit), as well as the battery module according to the present disclosure.

As described above, although the present disclosure has been described with reference to limited embodiments and drawings, the present disclosure is not limited thereto, and various modifications and variations are possible within the technical idea of the present disclosure.

Although the description of the present disclosure and the accompanying drawings to illustrate the embodiments thereof may be somewhat exaggerated in order to emphasize or highlight the technical concept of the present disclosure, it will be obvious to those skilled in the art that various types of modifications are possible in consideration of the content previously described and shown in the drawings.

In addition, it is obvious that expressions such as first, second, upper, lower, up, down, and the like in the description of the present disclosure are only instrumental terms used to relatively distinguish between respective components (elements), instead of to indicate a specific sequence or priority or to physically distinguish between the respective components (elements) according to absolute criteria.

## Claims

1. A battery module (1000) comprising:
a module case (300) configured to form an inner space;
a plurality of battery cells (110) accommodated in the inner space of the module case and arranged in at least one direction; and
a guiding plate (200) connected to at least one side surface of the module case and configured to extend in a diagonal direction,
wherein the module case comprises
side plates (340, 350) configured to cover both sides of the plurality of battery cells,
and
wherein the guiding plate is connected to the side plate and extends in the diagonal direction,
wherein the sides of the plurality of battery cells are disposed at each end of the plurality of battery cells in said at least one direction,
wherein the guiding plate comprises one or more through-holes (211) through which venting gas is discharged,
wherein the guiding plate comprises:
a first plate (210) extending in a diagonal direction; and
a second plate (220) disposed in a horizontal direction so as to be connected to the top of the first plate and configured to face and contact with an upper frame (10) of a pack housing.

2. The battery module according to claim 1,
wherein the through-holes are formed at an upper end of the guiding plate.

3. The battery module according to claim 1,
wherein the second plate comprises one or more through-holes formed inward from the first plate.

4. The battery module according to claim 3,
wherein the through-hole is formed to communicate with a venting channel formed inside the upper frame and to correspond to an inlet formed on the lower surface of the upper frame.

5. The battery module according to claim 1,
wherein the guiding plate has one or more groove lines (213) formed on the inner surface thereof to extend in a horizontal direction.

6. The battery module according to claim 1,
wherein the guiding plate has one or more protrusions (215) protruding outwards from the inner surface thereof.

7. A battery pack comprising the battery module according to any one of claims 1 to 6.

8. A vehicle comprising the battery module according to any one of claims 1 to 6.

## Patentansprüche

1. Batteriemodul (1000), umfassend:
• ein Modulgehäuse (300), das so konfiguriert ist, dass es einen Innenraum bildet;
• eine Vielzahl von Batteriezellen (110), die in dem Innenraum des Modulgehäuses untergebracht und in mindestens einer Richtung angeordnet sind; und
• eine Führungsplatte (200), die mit mindestens einer Seitenfläche des Modulgehäuses verbunden und so konfiguriert ist, dass sie sich in einer diagonalen Richtung erstreckt,
wobei das Modulgehäuse umfasst
• Seitenplatten (340, 350), die so konfiguriert sind, dass sie beide Seiten der Vielzahl von Batteriezellen abdecken,
und
wobei die Führungsplatte mit der Seitenplatte verbunden ist und sich in der diagonalen Richtung erstreckt,
wobei die Seiten der Vielzahl von Batteriezellen an jedem Ende der Vielzahl von Batteriezellen in der mindestens einen Richtung angeordnet sind,
wobei die Führungsplatte ein oder mehrere Durchgangslöcher (211) aufweist, durch die Entgasungsgas abgeführt wird,
wobei die Führungsplatte umfasst:
• eine erste Platte (210), die sich in einer diagonalen Richtung erstreckt; und
• eine zweite Platte (220), die in einer horizontalen Richtung so angeordnet ist, dass sie mit der Oberseite der ersten Platte verbunden ist, und so konfiguriert ist, dass sie einem oberen Rahmen (10) eines Packgehäuses zugewandt ist und diesen berührt.

2. Batteriemodul nach Anspruch 1,
wobei die Durchgangslöcher an einem oberen Ende der Führungsplatte ausgebildet sind.

3. Batteriemodul nach Anspruch 1,
wobei die zweite Platte ein oder mehrere Durchgangslöcher umfasst, die von der ersten Platte nach innen ausgebildet sind.

4. Batteriemodul nach Anspruch 3,
wobei das Durchgangsloch so ausgebildet ist, dass es mit einem in dem Inneren des oberen Rahmens ausgebildeten Entgasungskanal in Verbindung steht und einem an der Unterseite des oberen Rahmens ausgebildeten Einlass entspricht.

5. Batteriemodul nach Anspruch 1,
wobei die Führungsplatte eine oder mehrere Nutlinien (213) aufweist, die auf ihrer Innenfläche ausgebildet sind, um sich in einer horizontalen Richtung zu erstrecken.

6. Batteriemodul nach Anspruch 1,
wobei die Führungsplatte einen oder mehrere Vorsprünge (215) aufweist, die von ihrer Innenfläche nach außen ragen

7. Batteriepack, umfassend das Batteriemodul nach einem der Ansprüche 1 bis 6.

8. Fahrzeug, umfassend das Batteriemodul nach einem der Ansprüche 1 bis 6.

## Revendications

1. Module de batterie (1000) comprenant :
• un boîtier de module (300) configuré pour former un espace interne ;
• une pluralité de cellules de batterie (110) logées dans l'espace interne du boîtier de module et disposées dans au moins une direction ; et
• une plaque de guidage (200) reliée à au moins une surface latérale du boîtier de module et configurée pour s'étendre dans une direction diagonale,
dans lequel le boîtier de module comprend
• des plaques latérales (340, 350) configurées pour recouvrir les deux côtés de la pluralité de cellules de batterie,
et
dans lequel la plaque de guidage est reliée à la plaque latérale et s'étend dans la direction diagonale,
dans lequel les côtés de la pluralité de cellules de batterie sont disposés à chaque extrémité de la pluralité de cellules de batterie dans ladite au moins une direction,
dans lequel la plaque de guidage comprend un ou plusieurs trous traversants (211) à travers lesquels du gaz de dégazage est déchargé,
dans lequel la plaque de guidage comprend :
• une première plaque (210) s'étendant dans une direction diagonale ; et
• une seconde plaque (220) disposée dans une direction horizontale de manière à être reliée au sommet de la première plaque et configurée pour faire face à et entrer en contact avec un cadre supérieur (10) d'un boîtier de pack.

2. Module de batterie selon la revendication 1,
dans lequel les trous traversants sont formés au niveau d'une extrémité supérieure de la plaque de guidage.

3. Module de batterie selon la revendication 1,
dans lequel la seconde plaque comprend un ou plusieurs trous traversants formés vers l'intérieur à partir de la première plaque.

4. Module de batterie selon la revendication 3,
dans lequel le trou traversant est formé pour communiquer avec un canal de dégazage formé à l'intérieur du cadre supérieur et pour correspondre à une entrée formée sur la surface inférieure du cadre supérieur.

5. Module de batterie selon la revendication 1,
dans lequel la plaque de guidage présente une ou plusieurs lignes de rainure (213) formées sur sa surface interne pour s'étendre dans une direction horizontale.

6. Module de batterie selon la revendication 1,
dans lequel la plaque de guidage présente une ou plusieurs saillies (215) faisant saillie vers l'extérieur depuis sa surface interne

7. Bloc-batterie comprenant le module de batterie selon l'une quelconque des revendications 1 à 6.

8. Véhicule comprenant le module de batterie selon l'une quelconque des revendications 1 à 6.
